# EUROPEAN PATENT SPECIFICATION

(11) **EP 0 653 463 B1**
(45) Date of publication and mention of the grant of the patent: **12.05.1999**
(21) Application number: 94117550.7
(22) Date of filing: 07.11.1994
(51) Int. Cl.: C08L 83/07, C08K 3/08

(54) **Electrically conductive silicone rubber composition**
Elektrisch leitfähige Silikonkautschukzusammensetzung
Composition électroconductive de caoutchouc de silicone

(30) Priority: 08.11.1993 JP 302352/93
(43) Date of publication of application: 17.05.1995
(73) Proprietor: Dow Corning Toray Silicone Company, Limited, Tokyo 103 (JP)
(72) Inventor: Mine, Katsutoshi, Dow Corning Toray Silicone, Ichihara-shi, Chiba Prefecture (JP); Nakayoshi, Kazumi, Dow Corning Toray Silicone, Ichihara-shi, Chiba Prefecture (JP); Tazawa, Rikako, Dow Corning Toray Silicone, Ichihara-shi, Chiba Prefecture (JP)
(74) Representative: Spott, Gottfried, Dr.

(56) References cited:
- EP-A- 0 367 562
- EP-A- 0 545 568
- US-A- 4 777 205

## Description

This invention relates to organosiloxane compositions curable to electrically conductive silicone rubber wherein the curing characteristics of the composition do not vary substantially with the age of the composition.

The excellent electrical conductivity and other properties of silicone rubber prepared from curable compositions containing electrically conducting additives has made such rubbers desirable for use in special areas where heat resistance, flexing resistance, and electrical conductivity are required. JP-A 3-170581 proposes for these applications a curable composition containing an organopolysiloxane containing at least 2 alkenyl radicals per molecule, an organohydrogensiloxane containing at least 2 silicon atom-bonding hydrogen atoms in a molecule, a catalyst containing a platinum group metal, and silver powder.

The types of silver powder used for preparing conductive silicone rubber can be classified as
1) reduced silver powder, obtained by reducing an aqueous solution of silver nitrate with a reducing agent such as hydrazine, formaldehyde or ascorbic acid;
2) electrolytic silver powder deposited at the cathode during electrolysis of an aqueous silver nitrate solution, and
3) atomized silver powder obtained by spraying molten silver heated above 1000°C into water or an inert gas.

The shapes of silver particles produced using these three methods are typically classified as granular, flake, dendritic, or amorphous. The flake form of silver powder is particularly preferred because it can form high conductivity silicone rubber.

The electrically conductive organosiloxane composition described in the above publication has disadvantages, including poor cure and degradation in composition curability during aging, to such an extent that the composition eventually will not cure at all.

These problems are solved by the present invention which provides a conductive silicone rubber composition exhibiting reduced change in curability during aging.

We have conducted intensive studies in our attempt to solve the problems associated with the prior art. We found that these curing problems result from contamination of the silver powder by ionic impurities, such as NH₄⁺ and SO₄²⁻ during the manufacture or storage of the powder. The present invention is based on our finding that the undesirable changes in curing characteristics can be suppressed by using silver powder containing less that 10 ppm of NH₄⁺ content and less than 5 ppm of SO₄⁻² content. These concentrations are determined by extracting the powder in water under the conditions of 121°C, 202.6 kPa (2 atmospheres) pressure, and 100 percent relative humidity (RH), for 20 hours.

This invention provides a curable organosiloxane composition yielding an electrically conductive silicone rubber, said composition comprising:
(A) 100 parts by weight of an organopolysiloxane containing at least 2 alkenyl radicals per molecule
(B) a concentration of an organohydrogensiloxane containing at least 2 silicon-bonded hydrogen atoms per molecule equivalent to 0.5 to 3 silicon-hydrogen atoms per alkenyl radical present in ingredient (A),
(C) from 50 to 2000 parts by weight of a silver powder wherein the NH₄⁺ concentration is less than 10 ppm and the SO₄⁻² concentration is less than 5 ppm, as determined by extraction in water for 20 hours at a temperature of 121°C, a pressure of 202.6 kPa (2 atmospheres) and 100 % relative humidity; and
(D) an amount sufficient to promote curing of said composition of a catalyst selected from metals of the platinum group of the periodic table and compounds of said metals.

The organopolysiloxane, ingredient (A), is the principal component of the present compositions. This ingredient should contain at least 2 alkenyl radicals in a molecule. The alkenyl radical includes vinyl, allyl, butenyl, pentenyl, hexenyl, or heptenyl, with vinyl being preferred.

There are no particular limitations on the bonding site of the alkenyl radical in ingredient (A). This radical can be located at the terminals of the molecular chain, on side chains of the molecular chain, or at both locations. The organic groups other than alkenyl radicals in ingredient (A) are alkyl radicals such as methyl, ethyl, propyl, butyl, pentyl, and hexyl; aryl radicals such as phenyl, tolyl and xylyl; aralkyl radicals such as benzyl and phenethyl; and halogen substituted alkyl radicals such as 3-chloropropyl and 3,3,3-trichloropropyl. Methyl and phenyl radicals are preferred. Also, there is no particular limitation for the molecular structure of ingredient (A), and specifically it can be straight chain, partially branched straight chain, branched chain, and network structure, or this ingredient can be a mixture of two or more organopolysiloxanes having these structures.

While there is no particular limitation on the viscosity of ingredient (A), the viscosity at 25°C is preferably in the range of 50-500,000 mPa.s (centipoise), and more preferably in the range of 400-10,000 mPa·s.

Specific examples of organopolysiloxanes suitable as ingredient (A) are dimethylsiloxane-methylvinylsiloxane copolymers containing trimethylsiloxy groups at both terminal positions, methylvinylpolysiloxanes containing trimethylsiloxy groups at both terminal positions, methylvinylsiloxanemethylphenylsiloxane copolymer containing trimethylsiloxy groups at both terminal positions, dimethylsiloxane-methylvinylsiloxanemethylphenylsiloxane copolymers containing trimethylsiloxy groups at both terminal positions, dimethylpolysiloxanes containing dimethylvinylsiloxy groups at both terminal positions, methylvinylpolysiloxanes containing dimethylvinylsiloxy groups at both terminal positions, methylphenylpolysiloxanes containing dimethylvinylsiloxy groups at both terminal positions, dimethylsiloxane-methylvinylsiloxane copolymers containing dimethylvinylsiloxy groups at both terminal positions, dimethylsiloxane-methylphenylsiloxane copolymers containing dimethylvinylsiloxy groups at both terminal positions, dimethylsiloxane-methylvinylsiloxane copolymers containing silanol groups at both terminal positions, methylvinylpolysiloxanes containing silanol groups at both terminal positions, dimethylsiloxane-methylvinylsiloxane-methylphenylsiloxane copolymers containing silanol groups at both terminal positions, silicone resins consisting essentially of R₃SiO_{1/2} units and SiO_{4/2} units, silicone resin consisting essentially of RSiO_{3/2} units, silicone resins consisting essentially of R₂SiO_{2/2} units and RSiO_{3/2} units, silicone resins consisting essentially of R₂SiO_{2/2} units and RSiO_{3/2} units and SiO_{4/2} units, and mixtures of two or more of these. In the foregoing unit formulas of silicone resins, R represents a substituted or unsubstituted monovalent hydrocarbon radical, with at least one of the R groups being an alkenyl radical.

Specific examples of the hydrocarbon radicals represented by R include alkyl radicals such as methyl, ethyl, propyl, butyl, pentyl and octyl radical; alkenyl radicals such as vinyl, allyl, butenyl, pentenyl, and hexenyl; aryl radicals such as phenyl, tolyl and xylyl; aralkyl radicals such as benzyl and phenethyl; and halogen substituted alkyl radicals such as 3-chloropropyl radical and 3,3,3-trichloropropyl.

The organohydrogenpolysiloxane, ingredient (B), functions as a crosslinking agent for the present compositions. This ingredient should contain at least 2 silicon-bonded hydrogen atoms in a molecule. There is no particular limitation on the bonding site of the silicon-bonded hydrogen atoms in ingredient (B). Rather, they can be located at the terminal positions of the molecular chain, on side chains, or at both terminal and side positions.

The organic groups present on ingredient (B) can be any of the monovalent hydrocarbon radicals discussed for ingredient (A), with the exception of ethylenically unsaturated radicals such as alkenyl. There is no particular limitation for the molecular structure of ingredient (B).

While there is no particular limitation on the viscosity of ingredient (B), the viscosity at 25°C is preferably in the range of 1-50,000 mPa.s (centipoise), and more preferably in the range of 5-1,000 mPa·s.

Specific examples of organohydrogensiloxanes suitable as ingredient (B) are methylhydrogensiloxane containing trimethylsiloxy groups at both terminals, dimethylsiloxane-methylhydrogensiloxane copolymers containing trimethylsiloxy groups at both terminals, methylhydrogensiloxane-methylphenylsiloxane copolymers containing ended with trimethylsiloxy groups at both terminals, dimethylsiloxane-methylhydrogensiloxanemethylphenylsiloxane copolymers containing trimethylsiloxy groups at both terminals, dimethylpolysiloxanes containing dimethylhydrogensiloxy groups at both terminals, methylhydrogensiloxanes containing dimethylhydrogensiloxy groups at both terminals, dimethylsiloxane-methylhydrogensiloxane copolymers containing dimethylhydrogensiloxy groups at both terminals, dimethylsiloxane-methylphenylsiloxane copolymers containing dimethylhydrogensiloxy groups at both terminals, methylphenylpolysiloxanes containing dimethylhydrogensiloxy groups at both terminals, methylhydrogensiloxanes containing silanol groups at both terminals, dimethylsiloxane-methylhydrogensiloxane copolymers containing silanol groups at both terminals, methylhydrogensiloxane-methylphenylsiloxane copolymers containing silanol groups at both terminals, and dimethylsiloxane-methylhydrogensiloxane-methylphenylsiloxane copolymers containing silanol groups at both terminals.

The concentration of ingredient (B) in our composition should be sufficient to provide from 0.5 to 3 silicon-bonded hydrogen atoms per alkenyl radical present in ingredient (A). If the present compositions contain fewer than 0.5 silicon-bonded hydrogen atoms per alkenyl radical in ingredient (A), the composition does not cure sufficiently. If the concentration of silicon-bonded hydrogen atoms exceeds 3 per alkenyl radical in ingredient (A), the heat resistance of the conductive silicone rubber obtained after curing is drastically degraded.

An alternative type of organohydrogensiloxane that can be used in the present curable organosiloxane compositions is referred to hereinafter as ingredient (B') and functions as both a crosslinking or curing agent for ingredient (A) and as an adhesion promoting additive. Ingredient (B') should contain at least 2 silicon atom-bonded hydrogen atoms per molecule in addition to at least 1 silicon-bonded alkoxy group.

There are no limitations relative to the bonding sites of the silicon-bonded hydrogen atoms and alkoxy groups in ingredient (B'). These substituents can be located at terminal positions, in the linear portion of the molecule, on side chains, or at two or more of these locations.

The silicon bonded organic groups of ingredient (B') other than the alkoxy groups, can be any substituted or unsubstituted monovalent hydrocarbon radical that is free of ethylenic unsaturation. Examples of suitable hydrocarbon radicals are as discussed for ingredient (B).

While there is no limitation on the viscosity of ingredient (B'), the viscosity is preferably in the range of 1-50,000 centipoise (0.001 - 50 Pa.s), most preferably in the range of 5-1,000 centipoise (0.005 to 1 Pa.s).

Specific classes of organohydrogensiloxanes suitable for use as ingredient (B') can be represented by the following formulae.

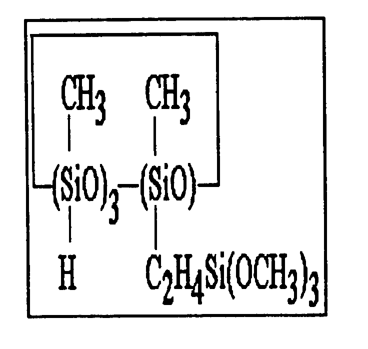

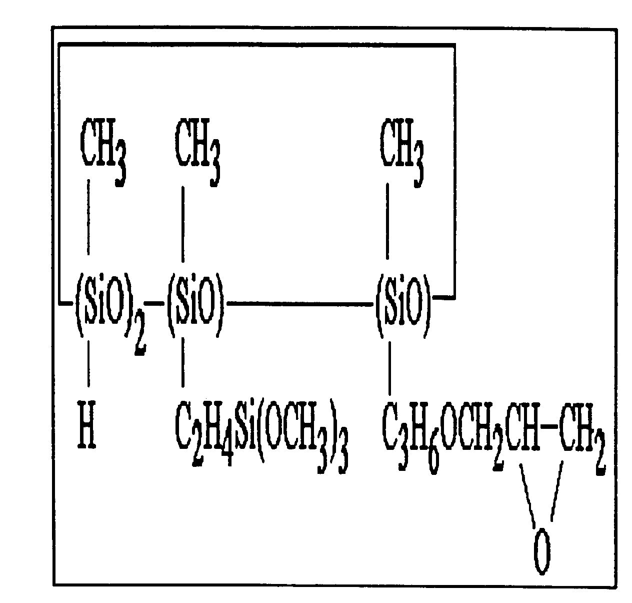

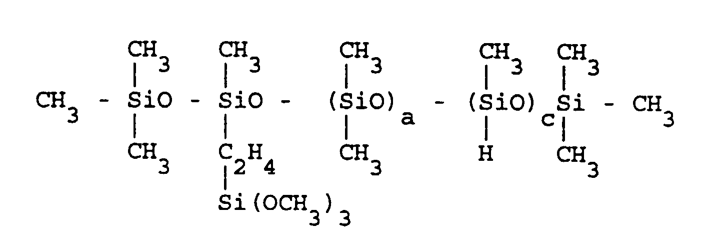

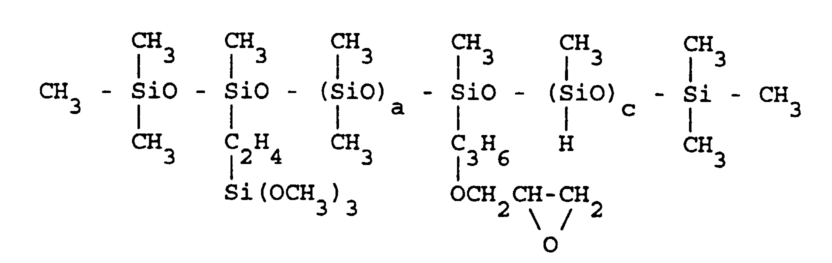

In the preceding formulae, a is an integer with a value of at least 1 and c is an integer with a value of at least 2.

There are no limitations on the methods that can be used to prepare ingredient (B'). Useful methods include the addition reaction between an organohydrogensiloxane containing at least 3 silicon atom-bonding hydrogen atoms in a molecule with less than a stoichiometric amount, based on the moles of silicon-bonded hydrogen atoms, of an alkenyl-substituted alkoxysilane. The reaction is conducted in the presence of a suitable hydrosilation catalyst. Alternatively, an alkenyltrialkoxysilane and an alkenyl group-containing epoxy compound can be reacted with an organohydrogensiloxane containing at least 4 silicon-bonded hydrogen atoms in a molecule in the presence of a suitable hydrosilation catalyst. The only requirement for these reactions is that the final organohydrogensiloxane (ingredient B') contain at least two silicon-bonded hydrogen atoms per molecule.

The silver powder, ingredient (C), of the present compositions provides electrical conductivity to the silicone rubber obtained by curing our compositions. The concentration of NH₄⁺ ions in the silver must be is less than 10 ppm and the concentration of SO₄⁻² ions must be less than 5 ppm. These concentrations are determined by extracting the powder in water for 20 hours at a temperature of 121° C under a pressure of 202.6 kPa (2 atm.) and a relative humidity (RH) of 100%.

When the concentrations of NH₄⁺ and SO₄⁻² ions exceed the limits of the present invention, the composition may not cure, or there will be a drastic change in curing characteristics with aging.

Ingredient (C) can be reduced silver powder, electrolytic silver powder, or atomized silver powder. The silver can be pure silver or alloyed with other metals such as copper or palladium alloy, which can contain small amounts of additional metals such as zinc, tin, magnesium, and nickel.

While there is no particular limitation for the particle size of ingredient (C), the average particle size is preferably in the range of 1-10 µm. There is no particular limitation for the shape of the particles of ingredient (C), which can be granular, dendritic, flakes, amorphous, or a mixture of two or more of these shapes. The flake form is preferred for producing highly conductive silicone rubbers.

There is no particular limitation on the method used to prepare the silver powder of ingredient (C). Reduced silver powder can be suitably prepared by using reducing agents such as formaldehyde, ascorbic acid, which do not contain nitrogen or sulfur. The resultant silver powder is frequently washed repeatedly with ion-exchanged water.

Electrolytic and atomized silver powders should be repeatedly washed with ion-exchanged water before use. In accordance with preferred methods for washing silver powder, the powder is stirred in a large quantity of warm ion-exchanged water, the silver powder is boiled in a large quantity of ion-exchanged water, or the silver powder is extracted in ion-exchanged water under high temperature and pressure conditions such as 121°C, 202.6 kPa (2 atm), and 100 % RH, using a pressure vessel.

The resultant washed silver powder is preferably surface-treated using at least one organosilicon compound. Organosilicon compounds that are useful for this purpose include alkoxysilanes such as methyltrimethoxysilane, vinyltrimethoxysilane, 3-glycidoxypropyltrimethoxysilane, 3-methacryloxypropyltrimethoxysilane, dimethyldimethoxysilane, trimethylmethoxysilane, trimethylethoxysilane, tetramethoxysilane, and tetraethoxysilane; organosiloxane oligomers such as dimethylsiloxane oligomer containing silanol groups at both terminals, dimethylsiloxane-methylvinylsiloxane oligomers containing silanol groups at both terminals, methylvinylsiloxane oligomer containing silanol groups at both terminals, methylphenylsiloxane oligomer containing silanol groups at both terminals, 1,3,5,7-tetramethyltetracyclosiloxane, and 1,3,5,7,9-pentamethylpentacyclosiloxane; low viscosity to gummy organopolysiloxanes that are dimethylpolysiloxanes containing trimethylsiloxy groups at both terminals, dimethylsiloxane-methylvinylsiloxane copolymers containing trimethylsiloxy groups at both terminals, dimethylsiloxane-methylphenylsiloxane copolymers containing trimethylsiloxy groups at both terminals, methylhydrogensiloxanes containing trimethylsiloxy groups at both terminals, dimethylsiloxane-methylhydrogensiloxane copolymers containing trimethylsiloxy groups at both terminals, dimethylpolysiloxanes containing silanol groups at both terminals, dimethylsiloxane-methylvinylsiloxane copolymers containing silanol groups at both terminals, dimethylsiloxane-methylphenylsiloxane copolymers containing silanol groups at both terminals, methylhydrogensiloxanes containing silanol groups at both terminals, dimethylsiloxane-methylhydrogensiloxane copolymers containing silanol groups at both terminals, dimethylpolysiloxanes containing dimethylvinylsiloxy groups at both terminals, dimethylsiloxane-methylvinylsiloxane copolymers containing dimethylvinylsiloxy groups at both terminals, dimethylsiloxane-methylphenylsiloxane copolymers containing dimethylvinylsiloxy groups at both terminals, dimethylpolysiloxanes containing dimethylhydrogensiloxy groups at both terminals, and dimethylsiloxane-methylhydrogensiloxane copolymers containing dimethylhydrogensiloxy groups at both terminals; silicone resins such as silicone resins consisting of R'₃SiO_{1/2} units and SiO_{4/2} units, silicone resins consisting of R'SiO_{3/2} units, silicone resins consisting of R'₂SiO_{2/2} units and R'₃SiO_{3/2} units, and silicone resins consisting of R'₂SiO_{2/2} units and R'₃SiO_{1/2} units and SiO_{4/2} units; and mixtures of two or more of these organosilicon compounds.

R' is a substituted or unsubstituted monovalent hydrocarbon radical selected from the same groups as the hydrocarbon radicals present in ingredient A of the present compositions.

When a silicone resin is used to treat the silver particles, the resin should preferably be solid and soften at a temperature higher than room temperature, preferably in the range from 50 to 150°C.

Also, when the highly conductive silver powder flake is manufactured by first pulverizing silver powder using a known means such as stamp mills, ball mills, vibratory mills, hammer mills, roller mills, or a mortar and pestle, followed by treatment with a fatty acid or an organosilicon compound, the excess fatty acid or organosilicon compound remaining on the flake surface must be removed with organic solvent. Then, the silver powder should be washed with ion-exchanged water to achieve an NH₄⁺ concentration below 10 ppm and an SO₄⁻² content below 5 ppm using the measuring conditions of the present invention.

The concentration of silver powder in our compositions should be in the range of 50-2000 parts by weight per 100 parts by weight of ingredient (A), preferably in the range of 300-600 parts. If the compounding amount of ingredient (C) is less than 50 parts, the conductivity of the silicone rubber obtained decreases drastically. If the concentration of (C) exceeds 2000 parts by weight, the flowability and handling of the final organosiloxane composition becomes extremely difficult.

Cure of the present compositions is by a hydrosilation reaction, and is promoted using a catalyst referred, to as ingredient (D), that is a metal from the platinum group of the periodic table, or a compound of one of these metals. Suitable catalysts are those useful for promoting hydrosilation reactions, and include platinum black, platinum-supported alumina powder, platinum-supported silica powder, platinum-supported carbon powder, chloroplatinic acid, an alcohol solution of chloroplatinic acid, a complex of chloroplatinic acid and olefin, and complexes of chloroplatinic acid and vinylsiloxanes. Another type of catalyst is dispersed in a thermoplastic organic resin such as poly(methylmethacrylate) resin, polycarbonate resin, polystyrene resin, and silicone resin.

The concentration of ingredient (D) should be sufficient to promote curing of the composition. Catalyst concentrations are preferably equivalent to 1-100 ppm of platinum, or other platinum group metal in ingredient (D), based on the combined weight of ingredients (A) and (B).

Compositions of the present invention can be prepared using ingredients (A), (B), (C) and (D), or ingredients (A), (B'), (C), and (D). If the composition does not contain ingredient (B'), the curable composition preferably includes an adhesion promoting additive referred to hereinafter as ingredient (E). This ingredient is an organosilicon compound containing at least one silicon-bonded alkoxy group per molecule.

Specific examples of ingredient (E) are alkoxysilanes such as tetramethoxysilane, tetraethoxysilane, dimethyldimethoxysilane, methylphenyldimethoxysilane, methylphenyldiethoxysilane, phenyltrimethoxysilane, methyltrimethoxysilane, methyltriethoxysilane, vinyltrimethoxysilane, allyltrimethoxysilane, allyltriethoxysilane, 3-glycidoxypropyltrimethoxysilane, and 3-methacryloxypropyl-trimethoxysilane. Organosiloxanes represented by the following formulae are preferred based on the adhesion exhibited by our cured materials to a variety of substrates:

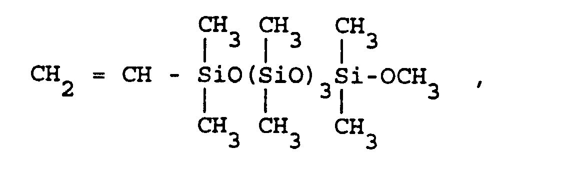

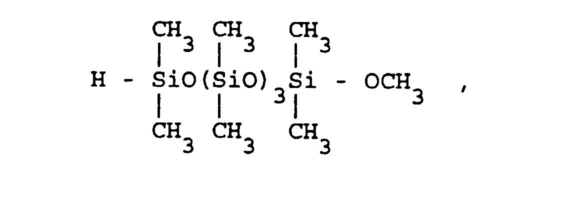

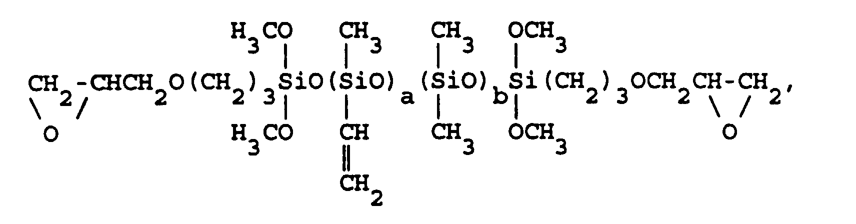

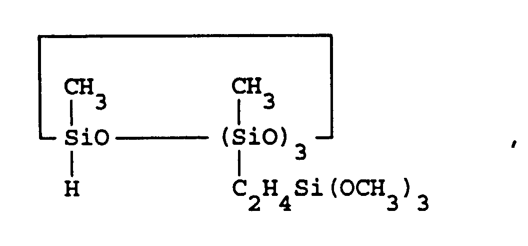

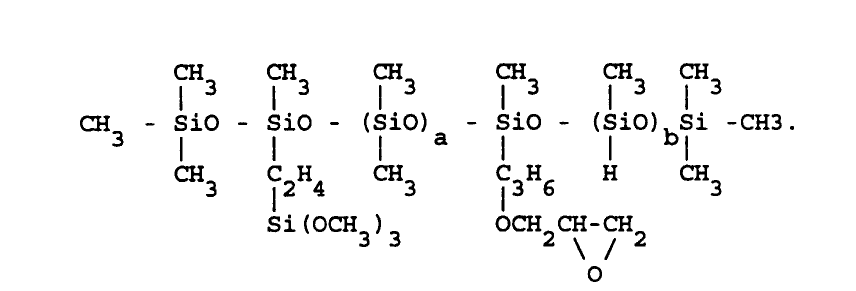

In the foregoing formulae a and b are identical or different integers with a value of at least 1.

When ingredient (E) is present, its concentration is preferably less than 20 parts by weight per 100 parts by weight of ingredient (A), more preferably in the range of 0.5-8 parts by weight. If ingredients (B') and (E) are both absent, our cured materials will not exhibit a useful level of adhesion. When the concentration of ingredient (E) exceeds 20 parts by weight per 100 parts of ingredient (A), the storage stability of the curable composition is degraded, and the hardness of the cured silicone rubber obtained increases with aging.

To improve the storage stability of the curable organosiloxane compositions of this invention, it is desirable to add a curing inhibitor as an optional ingredient. Suitable inhibitors are alkynols such as 3-methyl-1-butyne-3-ol, 3,5-dimethyl-1-hexyne-3-ol, and phenylbutynol; ene-yne compounds such as 3-methyl-3-pentene-1-yne, and 3,5-dimethyl-3-hexene-1-yne; 1,3,5,7-tetramethyl-1,3,5,7-tetravinylcyclotetrasiloxane, 1,3,5,7-tetramethyl-1,3,5,7-tetrahexenylcyclotetrasiloxane and benzotriazole.

The concentration of this inhibitor should be in the range of 0.001-5 parts by weight per 100 parts by weight of ingredient (A).

The present compositions preferably include an inorganic filler to impart appropriate hardness and strength to the cured, electrically conductive, silicone rubber. Examples of suitable fillers are fumed silica, crystalline silica, burned silica, wet method silica, fumed titanium oxide, and carbon black. Also, any of these fillers are suitable which have been hydrophobicized, using known methods or organosilicon compounds such as organoalkoxysilanes, organochlorosilanes, and organodisilazanes. The amount of filler present is preferably less than 50 parts by weight per 100 parts of ingredient (A).

Electrically conductive elastomeric materials prepared using the curable compositions of the present invention can be used as conductive adhesives, conductive die bonding agents, radiating die bonding agents, and electromagnetic shielding materials. The volume resistivity of the cured elastomeric materials is less than 10² Ωcm, and is less than 1 × 10⁻³ Ωcm in preferred compositions.

The following examples describe the preferred curable compositions of this invention and the cured elastomeric materials prepared from these compositions. Unless otherwise specified all parts and percentages are by weight and viscosities are the values measured at 25° C.

The concentrations of NH₄⁺ and SO₄⁻² in the silver powder, and the characteristics of our conductive silicone rubber compositions, and their conductive silicone rubbers are measured as the following.

### 1. NH₄⁺ and SO₄⁻² concentrations in the silver powder

Ten grams of the silver powder and 50 g. of ion-exchanged water were loaded and sealed into a 60 ml-stainless steel pressure vessel with an inner liner of polytetrafluoroethylene. The sealed vessel was placed in an oven at 121°C for 20 hours, during which time the silver powder was extracted in water under a pressure of 202.6 kPa (2 atm), and 100 % RH.

The water in the vessel was allowed to cool to room temperature, at which time the concentrations of NH₄⁺ and SO₄⁻² were determined by ion chromatography.

### 2. Hardness of the conductive silicone rubber composition

Samples of the cured, conductive silicone rubber were stored in a refrigerator, and hardness values were obtained from the composition immediately after preparation (initial), after 1 month, after 3 months, and after 6 months, by heating at 150°C for 30 minutes. They were evaluated by measurement with JIS A hardness meter described in JIS K 6301.

### 3. Volume resistivity of silicone rubber

Conductive silicone rubber sheet thicker than 1 mm was obtained by heating a conductive silicone rubber composition at 150° C for 30 minutes. Volume resistivity of this silicone rubber sheet was measured by a volume resistivity measurement apparatus identified as Model K-705RL manufactured by Kyowa Riken Co.

### 4. Adhesion of the cured silicone rubber

The adhesion of the conductive silicone rubber composition was measured by the tablet adhesion test method. By heating the conductive silicone rubber composition on a piece of aluminum plate at 150°C for 30 minutes, a silicone rubber bead (20 mm wide × 20 mm long × 5 mm thick) was formed. This bead was pulled away from the aluminum plate, and the surface of the rupture was observed. It was evaluated by recording as cohesive failure (CF) in the case of the silicone rubber being ruptured. It was rated as adhesive failure (AF) in the case of being completely peeled off at the interface between the cured rubber and the aluminum.

### Example 1

Silver nitrate 20 g was dissolved in 40 ml of deionized (DI) water. A 46 % aqueous solution of sodium hydroxide was added to the resultant solution to precipitate granular silver oxide. This granular silver oxide was reduced using formaldehyde, and the resultant silver powder was washed and filtered repeatedly. The average particle size of the granular silver powder was 1 µm. This reduced silver powder was milled in a ball mill together with a methylethylketone solution of oleic acid as the lubricant. The resultant surface treated powder was washed with methylethylketone to yield a flake form of silver with an average particle size 8 µm.

The silver flakes were washed repeatedly with deionized water at a temperature of 100° C to obtain a silver powder with an NH₄⁺ content of 2.5 ppm and an SO₄⁻² content of 1.0 ppm.

A curable composition of the present invention was prepared by blending to homogeneity 450 parts by weight of this silver powder, 100 parts of a mixture containing 1) a dimethylvinylsiloxy-terminated dimethylpolysiloxane containing 0.8 weight % of vinyl radicals and exhibiting a viscosity of 8000 mPa.s (centipoise), and 2) a silicone resin consisting essentially of (CH₃)₃SiO_{1/2} units, (CH₂=CH)(CH₃)₂SiO_{1/2} units and SiO_{4/2} units, 1 part by weight of a trimethylsiloxy-terminated methylhydrogensiloxane containing trimethylsiloxy groups (1.5 weight percent of silicon bonded hydrogen atoms) and a viscosity of 30 centipoise (0.03 Pa.s), 10 parts of a hydrophobic fumed silica, 500 ppm, based on the total weight of the composition, of phenylbutynol, a curing catalyst, and 7 parts of an adhesion-promoting organosilicon compound corresponding to the formula :

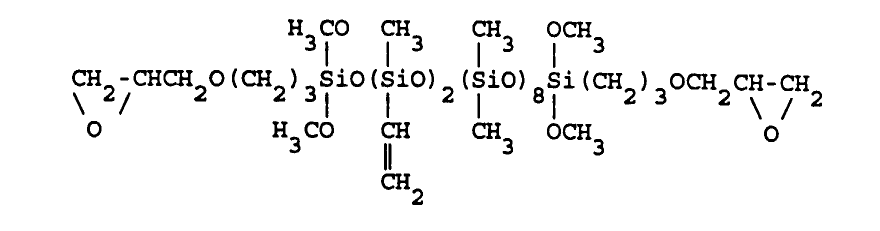

The curing catalyst was a complex of chloroplatinic acid and a vinylsiloxane dispersed in a thermoplastic silicone resin with a softening point of from 80-90° C and pulverized to fine particles. The concentration of catalyst was equivalent to 10 ppm of platinum, based on the total weight of the curable composition. The curability of the resultant organosiloxane composition was determined together with the volume resistivity of the silicone rubber obtained by curing this composition, and the adhesion of the cured composition. These results are reported in Table 1.

### Comparison Example 1

20 grams of silver nitrate were dissolved in 40 ml. of DI water, to which a 46 % aqueous solution of sodium hydroxide was added to precipitate granular silver oxide. Following reduction of this granular silver oxide using hydrazine, the resultant silver powder was washed and filtered repeatedly, to obtain granular reduced silver powder of the average particle size 1.5 µm. Following milling of this reduced silver powder in a ball mill with methylethylketone solution of oleic acid as the lubricant, the silver powder, which was surface-treated by oleic acid, was washed with methylethylketone, and silver flakes were prepared with an average particle size 8 µm. The NH₄⁺ content of the silver flakes were 15.0 ppm and the SO₄⁻² content was 6.0 ppm.

A curable composition outside the scope of the present invention was prepared by blending to homogeneity 450 parts by weight of this flake form of silver powder with the same types and amounts of additional ingredients used in Example 1. The curability of the resultant organosiloxane composition together with the volume resistivity of the silicone rubber obtained by curing this composition, and the adhesion of the cured composition were measured. These results are reported in Table 1.

### Example 2

Twenty grams of silver nitrate were dissolved in 40 ml of DI water, to which a 46 % aqueous solution of sodium hydroxide was added to precipitate granular silver oxide. Following reduction of the silver oxide with formaldehyde, it was washed and filtered repeatedly, yielding a reduced silver powder with an average particle size of 0.8 µm. This reduced silver powder was surface treated by milling in a ball mill together with a carbitol acetate solution of methylphenylsilicone resin exhibiting a softening point of 90°C and the average unit formula: 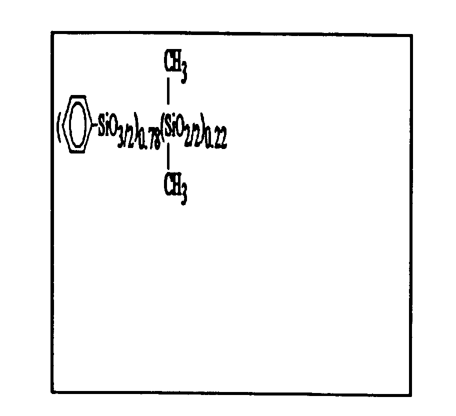 as the surface treating lubricant. The resultant treated silver flake exhibited an average particle size 6 µm. By repeated washings of this silver powder with deionized water at 80°C, the NH₄⁺ content reduced to 2.0 ppm and the SO₄⁻² content to 0.8 ppm.

A curable organosiloxane composition of the present invention was prepared by blending 400 parts by weight of this flake form of silver powder with 100 parts of a dimethylvinylsiloxy-terminated dimethylpolysiloxane exhibiting a vinyl content of 0.2 weight % and a viscosity of 2000 centipoise (2 Pa.s), 1 part by weight of a trimethylsiloxy-terminated methylhydrogensiloxane containing 1.5 weight percent of silicon-bonded hydrogen atoms and exhibiting a viscosity of 30 centipoise (0.03 Pa.s), and the same types and amounts of adhesion promoting organosilicon compound and curing catalyst used in example 1.

The curability of this conductive silicone rubber composition together with the volume resistivity of the silicone rubber obtained by curing this composition, and the adhesion of the composition were measured. These results are reported in Table 1.

### Comparative Example 2

Twenty grams of silver nitrate (20) were dissolved in 40 ml of DI water, following which a 46 % aqueous solution of sodium hydroxide was added to yield a precipitate of granular silver oxide. The silver oxide was reduced by hydrazine, washed and filtered repeatedly, yielding granular reduced silver powder exhibiting an average particle size of 0.8 µm. This powder was surface treated by milling in a ball mill together with a carbitol acetate solution of stearic acid as the lubricant. The resultant treated silver particles were washed with methanol, yielding a flake form of silver powder exhibiting an average particle size of 5 µm. The NH₄⁺ content of this silver powder was 20.0 ppm and the SO₄⁻² content was 5.0 ppm.

A curable composition outside the scope of the present invention was prepared by blending 420 parts of the treated silver powder to homogeneity with the same types and amounts of additional ingredients described in Example 2. The curability of the resultant organosiloxane composition together with the volume resistivity of the silicone rubber obtained by curing this composition, and the adhesive property of the composition were measured. These results are reported in Table 1.

### Example 3

Twenty grams of silver nitrate were dissolved 40 ml of DI water, following which a 46 % aqueous solution of sodium hydroxide was added to precipitate granular silver oxide. Following reduction of the granular silver oxide with formaldehyde, the resultant particles were washed and filtered repeatedly to yield granular reduced silver powder with an average particle size of 1 µm. Following repeated washings of the powder with DI water at 100° C the NH₄⁺ content was 5.0 ppm and the SO₄⁻² content was 3.8 ppm.

A curable organosiloxane composition within the scope of the present invention was prepared by blending 400 parts of this silver powder to homogeneity with 100 parts of a dimethylvinylsiloxy-terminated dimethylpolysiloxane exhibiting a vinyl content of 0.2 weight % and a viscosity of 2000 centipoise (2 Pa.s), 1 part by weight of a trimethylsiloxy-terminated methylhydrogensiloxane containing 1.5 weight percent of silicon-bonded hydrogen atoms and exhibiting a viscosity of 30 centipoise (0.03 Pa.s), 4 parts by weight of hydrophobic fumed silica, 300 ppm of phenylbutynol and the same type and amount of curing catalyst described in Example 1.

The curability of the resultant organosiloxane composition together with the volume resistivity and adhesion of the elastomer obtained following curing of the composition were measured and the results are reported in Table 1.

### Comparison Example 3

Twenty grams of silver nitrate were dissolved in 40 ml of DI water, following which a 46 % aqueous solution of sodium hydroxide was added to precipitate granular silver oxide. Following reduction of the granular silver oxide with hydrazine the resultant particles were washed and filtered repeatedly to yield granular reduced silver powder with an average particle size of 2 µm. The NH₄⁺ content of this silver powder was 30.0 ppm and the SO₄⁻² content was 6.0 ppm.

A curable composition outside the scope of the present invention was prepared by blending 400 parts by weight of this silver powder with the same type and amounts of additional ingredients described in Example 3. The curability of the resultant organosiloxane composition together with the volume resistivity and adhesion of the elastomer obtained following curing of the composition were measured and the results are reported in Table 1.

### Example 4

A curable organosiloxane within the scope of the present invention was prepared by blending 450 parts of the flake type of silver powder prepared as described in Example 1 to homogeneity with 52 parts by weight of the mixture of 1) dimethylvinylsiloxy-terminated dimethylpolysiloxane and 2) silicone resin described in Example 1, 48 parts of a dimethylvinylsiloxy-terminated dimethylpolysiloxane containing 0.43 weight percent of vinyl radicals and exhibiting a viscosity of 500 centipoise (0.5 Pa.s), 9 parts by weight of the organosilicon compound represented by the formula : 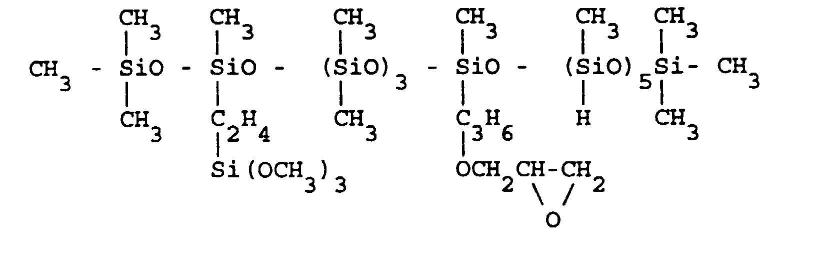 4 parts of a hydrophobic fumed silica, 320 ppm of phenylbutynol and the curing catalyst described in Example 1 in an amount equivalent to 11 ppm platinum in the curable composition. The curability of the resultant organosiloxane composition was evaluated together with the volume resistivity and adhesion of the elastomer prepared by curing the composition, and the results are reported in Table 1.

### Example 5

A curable organosiloxane composition of the present invention was prepared by blending to homogeneity 480 parts of the silver powder prepared as described in Example 1, 48 parts by weight of the mixture of 1) dimethylvinylsiloxy-terminated dimethylpolysiloxane and 2) silicone resin described in Example 1, 52 parts of a dimethylvinylsiloxy-terminated dimethylpolysiloxane containing 0.43 weight percent of vinyl radicals and exhibiting a viscosity of 500 centipoise (0.5 Pa.s); 12 parts of an adhesion promoting organosilicon compound represented by the formula : 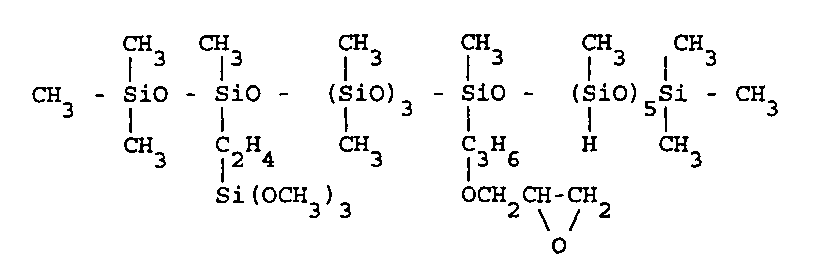 4 parts by weight of the adhesion-promoting organosilicon compound represented by the formula : 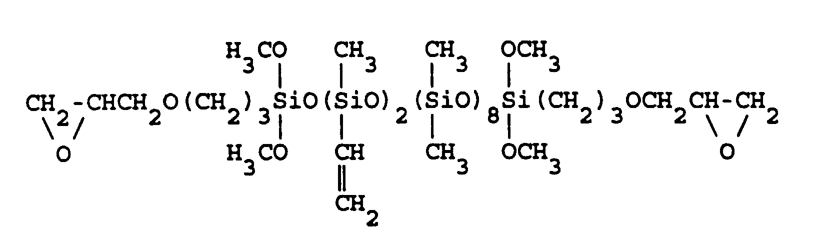 4 parts of hydrophobic fumed silica, 320 ppm of phenylbutynol and the type and amount of curing catalyst described in Example 1.

The curability of the resultant organosiloxane composition together with the volume resistivity and adhesion of the cured organosiloxane elastomer prepared using the composition were evaluated and the results are recorded in Table 1.

### Example 6

A curable composition of the present invention was prepared by blending to homogeneity 500 parts of the silver powder prepared as described in Example 3, 63 parts by weight of the organopolysiloxane/resin mixture described in Example 1, 63 parts by weight, dimethylpolysiloxane containing dimethylvinylsiloxy groups at both terminals (vinyl group content = 0.43 weight %), of which the viscosity is 500 centipoise, 37 parts by weight of a trimethylsiloxy-terminated methylhydrogensiloxane containing 1.5 weight percent of silicon-bonded hydrogen atoms and exhibiting a viscosity of 30 centipoise (0.03 Pa.s), 4 part by weight, hydrophobic fumed silica, 500 ppm, based on the weight of the curable composition of phenylbutynol, and 9 parts of the adhesion-promoting organosilicon compound represented by the formula :

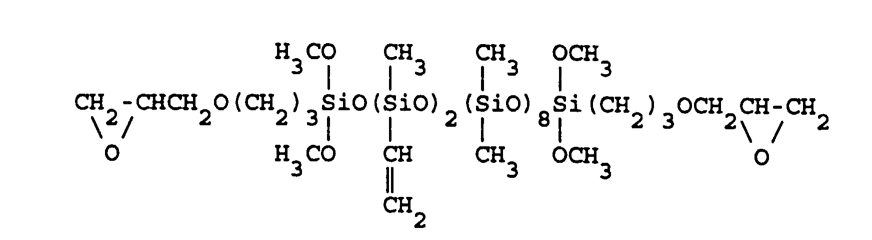

The curing catalyst described in Example 1 was used at a concentration equivalent to 11 ppm of platinum, based on the weight of the curable composition. The curability of the resulting organosiloxane composition in addition to the volume resistivity and adhesion of the silicone rubber obtained by curing this composition were measured and the results are recorded in Table 1.

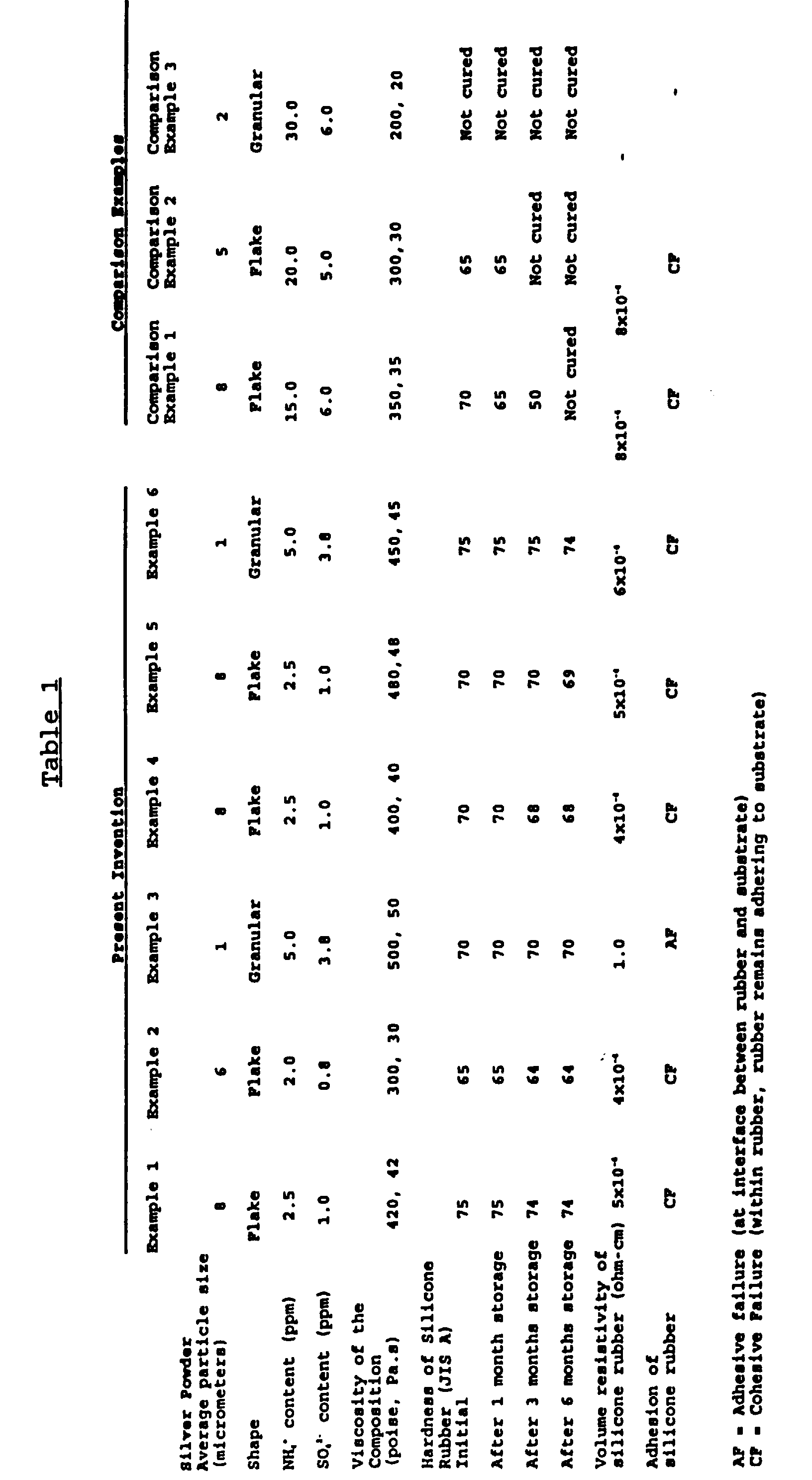

## Claims

1. An electrically conductive silicone rubber composition comprising
(A) 100 parts by weight of an organopolysiloxane containing at least 2 alkenyl radicals per molecule
(B) a concentration of an organohydrogensiloxane containing at least 2 silicon-bonded hydrogen atoms per molecule equivalent to 0.5 to 3 silicon-bonded hydrogen atoms per alkenyl radical present in ingredient (A),
(C) from 50 to 2000 parts by weight of a silver powder wherein the NH₄⁺ concentration is less than 10 ppm and the SO₄⁻² concentration is less than 5 ppm, as determined by extraction in water for 20 hours at a temperature of 121°C, a pressure of 202.6 kPa (2 atmospheres) and 100 % relative humidity; and
(D) from 1-100 ppm of a catalyst selected from metals from the platinum group of the periodic table, and compounds of said metals to promote curing of said composition.

2. A composition according to claim 1 wherein said organohydrogensiloxane further comprises at least one silicon-bonded alkoxy group per molecule.

3. A composition according to claim 1 wherein said composition further comprises at least one adhesion-promoting organosilicon compound, the viscosity of said organopolysiloxane is from 50 to 500,000 centipoise (0.05 to 500 Pa.s) at 25° C., the concentration of said silver powder is from 300 to 600 parts by weight per 100 parts of said organopolysiloxane, said silver powder is surface treated with a compound selected from organosilicon compounds and fatty acids.

## Patentansprüche

1. Elektrisch leitende Siliconkautschukzusammensetzung, die die folgenden Bestandteile umfaßt:
(A) 100 Gew.-Teile eines Organopolysiloxans mit mindestens 2 Alkenylresten pro Molekül;
(B) ein Organohydrogensiloxan mit mindestens 2 siliciumgebundenen Wasserstoffatomen pro Molekül in einer Konzentration, die 0,5 bis 3 siliciumgebundenen Wasserstoffatomen pro Alkenylrest, der in Bestandteil (A) vorhanden ist, entspricht;
(C) 50 bis 2000 Gew.-Teile eines Silberpulvers, wobei die NH₄⁺-Konzentration weniger als 10 ppm und die SO₄²⁻-Konzmtration weniger als 5 ppm gemäß Bestimmung durch Extraktion in Wasser während 20 h bei einer Temperatur von 121°C, einem Druck von 202,6 kPa (2 Atmosphären) und 100%iger relativer Luftfeuchtigkeit betragen; und
(D) 1-100 ppm eines Katalysators, der aus Metallen der Platingruppe des Periodensystems der Elemente und Verbindungen dieser Metalle ausgewählt ist, zur Förderung der Härtung der Zusammensetzung.

2. Zusammensetzung nach Anspruch 1, wobei das Organohydrogensiloxan des weiteren mindestens eine siliciumgebundene Alkoxygruppe pro Molekül umfaßt.

3. Zusammensetzung nach Anspruch 1, wobei die Zusammensetzung des weiteren mindestens eine die Haftung fördemde Organosiliciumverbindung umfaßt, die Viskosität des Organopolysiloxans 50-500.000 Centipoise (0,05 bis 500 Pa·s) bei 25°C beträgt, die Konzentration des Silberpulvers 300 bis 600 Gew.-Teile pro 100 Teile des Organopolysiloxans beträgt und das Silberpulver mit einer Verbindung, die aus Organosiliciumverbindungen und Fettsäuren ausgewählt ist, oberflächenbehandelt ist.

## Revendications

1. Une composition de caoutchouc de silicone conducteur de l'électricité, comprenant
(A) 100 parties en poids d'un organopolysiloxane contenant au moins 2 radicaux alcényles par molécule
(B) une concentration d'un organohydrogénosiloxane contenant au moins 2 atomes d'hydrogène liés au silicium par molécule équivalente à 0,5 à 3 atomes d'hydrogène liés au silicium par radical alcényle présent dans l'ingrédient (A),
(C) 50 à 2000 parties en poids d'une poudre d'argent dans laquelle la concentration de NH₄⁺ est inférieure à 10 ppm et la concentration de SO₄²⁻ est inférieure à 5 ppm, comme déterminé par extraction dans l'eau pendant 20 heures à une température de 121°C, une pression de 202,6 kPa (2 atmosphères) et une humidité relative de 100 % ; et
(D) 1 à 100 ppm d'un catalyseur choisi parmi les métaux du groupe du platine du Tableau Périodique et les composés desdits métaux, pour activer le durcissement de ladite composition.

2. Une composition selon la revendication 1, dans laquelle ledit organohydrogénosiloxane comprend, de plus, au moins un groupe alcoxy lié au silicium par molécule.

3. Une composition selon la revendication 1, dans laquelle ladite composition comprend, de plus, au moins un composé organosilicié améliorant l'adhérence, la viscosité dudit organopolysiloxane est de 0,05 à 500 Pa.s à 25°C, la concentration de ladite poudre d'argent est de 300 à 600 parties en poids pour 100 parties dudit organopolysiloxane, ladite poudre d'argent est traitée en surface avec un composé choisi parmi les composés organosiliciés et les acides gras.
